(19) **Europäisches Patentamt**

**European Patent Office**

**Office européen des brevets**

(11) Veröffentlichungsnummer: **0 266 446 B1**

(12) **EUROPÄISCHE PATENTSCHRIFT**

(45) Veröffentlichungstag der Patentschrift: **11.03.92**

(21) Anmeldenummer: **86115291.6**

(22) Anmeldetag: **04.11.86**

(51) Int. Cl.⁵: **G01L 9/00**, G01L 9/12, G01L 13/02

(54) **Kapazitiver Druckwandler.**

(43) Veröffentlichungstag der Anmeldung:
**11.05.88 Patentblatt 88/19**

(45) Bekanntmachung des Hinweises auf die
Patenterteilung:
**11.03.92 Patentblatt 92/11**

(84) Benannte Vertragsstaaten:
**CH DE FR GB IT LI**

(56) Entgegenhaltungen:
**DE-A- 3 021 477**
**DE-A- 3 110 295**

(73) Patentinhaber: **VEGA Grieshaber GmbH & Co.**

**W-7620 Wolfach(DE)**

(72) Erfinder: **Böhler, Ewald**
**Obere Rebbergstrasse 11**
**W-7620 Wolfach(DE)**

(74) Vertreter: **Eisenführ, Speiser & Strasse**
**Balanstrasse 55**
**W-8000 München 90(DE)**

EP 0 266 446 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft einen kapazitiven Druckwandler, bei dem mindestens eine Stirnseite eines vornehmlich zylindrischen Gehäuses mit einer Membran abgeschlossen ist, die unter Druck über ein Führungsglied eine Kondensatorplatte bezüglich einer fest angeordneten weiteren Kondensatorplatte verschiebt, wobei die beiden Kondensatorplatten mit Leitungen verbunden sind, die druckdicht aus dem Gehäuse herausgeführt sind.

Die DE-A-31 10 295 beschreibt einen derartigen kapazitiven Druckwandler, bei dem die beiden Stirnseiten des zylindrischen Gehäuses mit je einer Membran abgedeckt sind. Die Rückseiten der beiden Membranen sind über einen Stab mit einer Kondensatorplatte verbunden, die zwischen zwei weiteren fest angeordneten Kondensatorplatten verschwenkbar ist. Die drei Kondensatorplatten sowie deren Anschlußleitungen sind in einem weiteren zylindrischen Gehäuse angeordnet, das senkrecht auf dem eigentlichen Wandlergehäuse aufgesetzt ist.

Bei vielen Anwendungsfällen von Druckwandlern ist der für die Unterbringung des Druckwandlers zur Verfügung stehende Raum äußerst begrenzt, so daß der bekannte durch seine Formgebung sperrige Druckwandler nicht zum Einsatz kommen kann.

Die DE-A-30 21 477 zeigt zwar einen kapazitiven Druckwandler, der gegenüber dem vorstehend beschriebenen Druckwandler insofern kompakter ausgeführt ist, daß die die Kondensatorplatten bildenden Elemente konzentrisch zur Längsachse des Gehäuses angeordnet sind; jedoch erfolgt auch bei diesem bekannten Druckwandler eine Herausführung der Anschlußleitungen für die Elektroden senkrecht zur Achse des Gehäuses. Nachteilig ist ferner, daß die beiden Kondensatoren, die als Differenzkondensatoren geschaltet sind, nicht potentialfrei sind, das heißt, daß jeweils eine Kondensatorplatte auf dem Potential des Gehäuses liegt. Hierdurch kann es zu erheblichen Verfälschungen des Meßergebnisses kommen.

Der Erfindung liegt die Aufgabe zugrunde, einen kapazitiven Druckwandler anzugeben, der eine besonders kompakte Ausbildung besitzt.

Der erfindungsgemäße kapazitive Druckwandler gemäß Anspruch 1 zeichnet sich dadurch aus, daß die Anschlußleitungen für die Kondensatorplatten im Wesentlichen parallel zu der Zylinderachse des zylindrischen Gehäuses aus diesem herausgeführt sind. Die Meßwertgenauigkeit eines Druckwandlers wird durch Vermeidung der Reibung zwischen bewegten mechanischen Teilen und eine einfache Temperaturfeststellung im Wandler für eine Temperaturkompensation erhöht.

Die Anschlußleitungen für die Kondensatorplatten werden derart aus dem Gehäuse herausgeführt, daß die Gefahr eines Abbrechens nicht gegeben ist.

Durch eine derartige koaxiale Herausführung der Anschlußleitungen benötigen diese keinen zusätzlichen seitlichen Raum, so daß ein kompakter Druckwandler realisierbar ist. Ferner sind sie weniger gefährdet und schaffen die Voraussetzung für den einfachen Anbau einer koaxialen Auswertevorrichtung. Der erfindungsgemäße kapazitive Druckwandler läßt sich somit in einfacher Weise in eine Bohrung in einer Behälterwand oder dergleichen einsetzen. Die durch einen großen Teil des Druckwandlers verlaufenden achsparallelen Bohrungen lassen sich fertigungstechnisch auf einfache Weise anbringen.

Durch eine membranartige Halterung des Führungsgliedes erfolgt unter Druckeinfluß die achsparallele Bewegung der beweglichen Kondensatorplatte reibungsfrei.

Die koaxiale Anordnung der Leitungsführungen bietet ferner die Möglichkeit, innerhalb des Druckwandlers einen Temperatursensor anzubringen, dessen ebenfalls achsparallel herausgeführte Anschlußleitungen zur Temperaturkompensation der Auswerteschaltung zugeführt werden.

Da keine elektrische Verbindung der Anschlußleitungen oder des Kondensators zum Gehäuse besteht, ist der erfindungsgemässe kapazitive Druckwandler vollkommen potentialfrei.

Der Temperatursensor dient insbesondere zur Kompensation der thermischen Nullpunkt-Drift sowie einer Kompensation der temperaturabhängigen E Modul-Änderung der Meßmembran. Es kann auch eine Kompensation der temperaturabhängigen Änderung der Elektrizitätskonstanten einer möglichen Ölfüllung erfolgen. Solange die beiden Kondensatoren der Differenzkondensatoranordnung die gleiche Kapazität haben, wirkt sich zwar eine Änderung der Elektrizitätskonstanten der Ölfüllung aufgrund einer Temperaturänderung nicht aus, bei einer Auslenkung der beweglichen Elektrode verändern sich jedoch die Kapazitätswerte der beiden Kondensatoren so, daß ein Restfehler vorhanden ist, der anhand der festgestellten Temperaturänderungen elektrisch kompensiert werden muß.

Andere weitere bevorzugte Weiterbildungen des erfindungsgemäßen kapazitiven Druckwandlers sind in den abhängigen Ansprüchen gekennzeichnet.

Weitere Merkmale und Vorteile des erfindungsgemäßen Druckwandlers ergeben sich aus der nachfolgenden Beschreibung eines Ausführungsbeispiels anhand der Zeichnungen.

Es zeigen

Figur 1    einen Längsschnitt durch eine Ausführungsform des erfindungsgemäßen kapazitiven Druckwandlers;

Figur 2    einen Schnitt längst der Linie C-D in Figur 1 mit Blick auf die Rückseite einer eine der Kondensatorbeläge tragenden Keramikplatte mit Angabe der Schnittansicht der Figur 1 längs der Linie A-B dieser Figur;

Figur 3    eine Draufsicht auf eine Stirnansicht einer der Kondensatorplatten des Druckwandlers nach Figur 1;

Figur 4    eine membranartige Halterung für die bewegliche Kondensatorplattenanordnung und

Figur 5    eine Draufsicht auf diejenige Stirnfläche des Druckwandlers nach Figur 1, durch die die Leitungsanschlüsse herausgeführt sind.

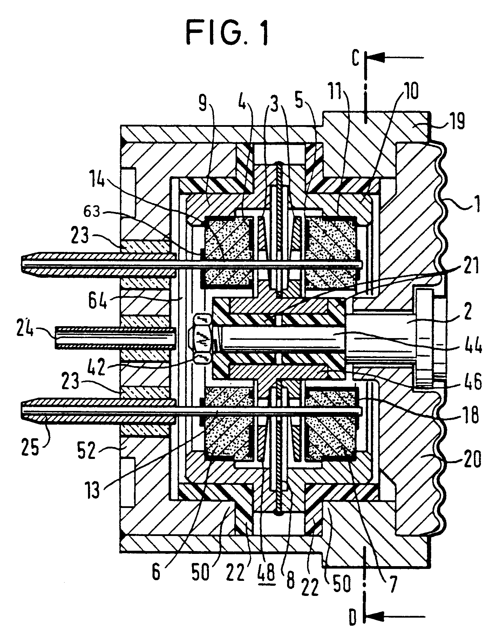

Figur 1 zeigt ein Ausführungsbeispiel des erfindungsgemäßen kapazitiven Druckwandlers. Dieser besitzt ein etwa zylindrisches Gehäuse 19, dessen eine Stirnseite durch eine Membran 1 abgeschlossen ist, die mit der Stirnkante des Gehäuses 19 vorzugsweise verschweißt ist. In geringem Abstand hinter der Membran im Inneren des Gehäuses 19 befindet sich - mit seiner Stirnfläche der Membran 1 angepaßt - ein Überlastblock 20, gegen den sich die Membran 1 bei Überlastung anlegt.

Durch eine zentrale Öffnung im Überlastblock 20 ist ein stangenartiges Führungsglied 2 gesteckt, dessen Stirnseite mit der Rückseite der Membran 1 verbunden, etwa verschweißt oder verklebt ist. Am inneren Teil 44 des Führungsgliedes 2 sind Isolierbuchsen 21 aufgesetzt, die etwa über eine Mutter 42 auf dem Teil 44 verspannt sind, so daß sie eine Nabe 46 eines zentralen Kondensatorplattenteiles 48 einspannen.

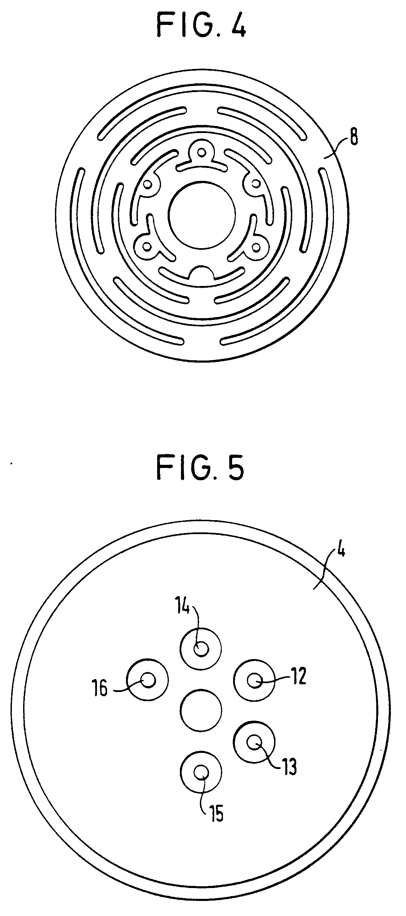

Zur Vermeidung einer reibenden Führung des Führungsgliedes 2 etwa im Überlastblock 20 ist auf dem zentralen Kondensatorplattenteil 48 eine federnde Scheibe 8 (Figur 4) aufgesetzt, deren Umfang zwischen zwei ringförmigen Schalen 9 und 10 eingespannt und mit diesen zu einer Einheit verbunden, insbesondere verschweißt, ist. Die Schalen 9, 10 sind im Inneren des Gehäuses 19 über weitere Isolierbuchsen 22 gehalten, die sich an ringförmigen Vorsprüngen 50 im Inneren des Gehäuses abstützen. Die der Membran 1 gegenüberliegende Stirnseite des Gehäuses ist dabei durch ein topfartiges Abschlußelement 52 druckdicht verschlossen, insbesondere mit dem zylindrischen Gehäuse 19 verschraubt oder verschweißt.

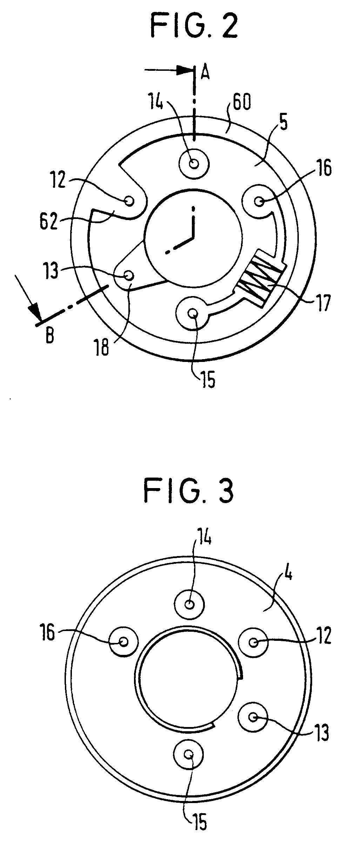

Die ringförmigen Schalen 9, 10 besitzen auch innere Anschlagkanten, an denen Keramikplatten 6, 7 in fixierter Position anliegen. Die sich gegenüber liegenden Stirnflächen der Keramikplatten 6, 7 sind, wie insbesondere Figur 3 zeigt, mit einer Metallisierung versehen, die die feststehenden Elektroden 4, 5 von zwei Differenzkondensatoren darstellen. Der Raum Zwischen diesen festen Kon

densatorelektroden 4, 5 wird ausgefüllt von dem beweglichen Doppelkondensatorteil 48, das symmetrisch zu der elastischen Scheibe 8 (Figur 4) zwei Kondensatorplatten 3 aufweist, deren den festen Kondensatorelektroden 4, 5 zugewandten planen Stirnflächen die zugeordneten beweglichen Kondensatorelektroden des Differenzkondesantors bilden. In einer neutralen Mittelstellung, in der auf die elastische Scheibe 8 keine Kräfte ausgeübt werden, ist der Abstand zwischen den festen und beweglichen Kondensatorelektroden vorzugsweise gleich.

Es sei noch erwähnt, daß die Keramikplatten 6, 7 zentrale Öffnungen besitzen, in denen berührungslos das Führungsglied 2 mit aufgesetzter Nabe 46 des beweglichen Kondensatorplattenteiles untergebracht ist.

Im Kontaktbereich mit der Innenmantelfläche der aus leitendem Material bestehenden Schalen 9, 10 sind die Keramikplatten 6, 7 auf Umfang mit leitendem Material etwa einer Metallisierung 11 versehen, die sich um die äußeren Stirnumfangskanten der Keramikplatten 6, 7 herum erstreckt, so daß sich ein metallischer Ring 60 (Figur 2) ergibt, der etwa über eine metalliserte Anschlußfläche 62 mit einem Anschlußleiter 12 verbunden ist, der parallel zur Zentralachse in ähnlicher Weise verläuft wie die Anschlußleitungen 13 und 14 (Figur 1, 2, 3 und 5) für die festen Kondensatorelektroden 4, 5. Die Leitungsführungen werden nachstehend noch im einzelnen beschrieben.

Wie bereits erwähnt, bilden die sich gegenüber liegenden metallisierten Stirnflächen der beiden Keramikplatten 6 und 7 die festen Kondensatorelektroden 4 und 5. Die Metallisierungen sind über die Innenmantelfläche der Scheiben fortgesetzt und enden auf der rückseitigen Stirnfläche der Keramikplatten 6, 7 in einer metallisierten Zunge, die für die Keramikplatte 7 in Figur 1 und 2 gezeigt ist. Die Zunge 18 ist mit der Anschlußleitung 13 leitend verbunden, die durch fluchtende Bohrungen in den Keramikplatten 6, 7 und durch entsprechende Öffnungen in den Kondensatorplatten 3 verläuft. Bevorzugt ist die Anschlußleitung 13 an der äußeren Stirnseite der Keramikplatte 6 zu Ihrer weiteren Fixierung verlötet oder anderweitig befestigt.

Die Anschlußleitung 13 wird eingelötet in ein Metallröhrchen 25, das innig mit dem Druckglasring 23 verbunden ist, nach außen geführt. Der Druckglasring 23 ist druckdicht in dem topfartigen Abschlußelement 52 eingebettet.

Voranstehend wurde die Leitungsführung für die feste Kondensatorelektrode 5 auf der Keramikplatte 7 beschrieben. Die Leitungsführung für die Anschlußleitung 14 für die feste Kondensatorelektrode 4 auf der Innenseite der Keramikplatte 6 verläuft in ähnlicher Weise, wobei jedoch das innere Ende der Anschlußleitung 14, das aus Symetriegründen auch durch die in Figur 1 rechte Keramikplatte 7 geführt ist, auf der äußeren Stirnseite dieser Keramikplatte verlötet oder anderweitig befestigt ist, während der elektrische Kontakt über eine metallisierte Zunge 63 (Figur 1) erfolgt, die über die Metallisierung am Innenmantel der Keramikplatte 6 mit der Metallisierung der Kondensatorelektrode 4 in leitender Verbindung steht.

Eine ähnliche Leitungsführung mit entsprechender Isolierung bzw. entsprechender Kontaktfreiheit ist auch für den bereits erwähnten Anschlußleiter 12 (Figur 2) vorgesehen, der die elektrische Verbindung zu den beweglichen Kondensatorplatten 3 über die elastische Scheibe 8 und die Schalen 9, 10 herstellt.

Bei Druckausübung auf die Membran 1 wird diese in Figur 1 nach links bewegt, so daß sich der Abstand zwischen der beweglichen Kondensatorplatte 3 und der ihr gegenüberliegenden feste Kondensatorelektrode 4 verringert, während sich der Abstand zwischen der anderen beweglichen Kondensatorplatte 3 und der ihr gegenüberliegenden festen Kondensatorelektrode 5 vergrößert. Diese Kapazitätsänderung wird in einer an sich bekannten, nicht näher dargestellten, Auswerteschaltung festgestellt und zur Anzeige des auf die Membran 1 ausgeübten Druckes verwendet. Bei Überlastung legt sich die Membran 1 an den Überlastblock 20 an, so daß eine Berührung der beweglichen Kondensatorplatte 3 an der festen Kondensatorelektrode 4 verhindert wird.

Figur 1 zeigt ein Röhrchen 24 das zum Innenraum 64 zwischen dem topfartigen Abschlußelement 52 und der linken Platte 6 führt. Ist das Röhrchen 24 offen, dann erfolgt die Messung als Referenzdruckmessung gegenüber dem atmosphärischen Druck. Andererseits besteht die Möglichkeit an dem Röhrchen 24 eine entsprechende Bezugsdruckquelle anzuschließen, so daß ein entsprechender Differenzdruck gemessen werden kann, der auf die Membran 1 ausgeübt wird. Bei verschlossenem Röhrchen 24 und evakuierten Innenraum arbeitet die Anordnung als Absolutdruckmesser.

Figur 2 veranschaulicht, daß zur Temperaturkompensation auf der Keramikplatte 5 ein Temperatursensor 17 aufgebracht sein kann, der mit Anschlußleitungen 15, 16 in leitender Verbindung steht, die in ähnlicher Weise aus dem Inneren des Druckwandlers mit entsprechender Isolierung und Fixierung herausgeführt sind, wie die Leitungen 12 bis 14. Die mittels des Temperatursensors 17 festgestellte Temperatur wird dann über die Anschlußleitungen 15, 16 als elektrisches Signal an die Auswerteschaltung angelegt und in dieser in bekannter Weise zur Temperaturkompensation verwendet.

Die Führung der Anschlußdrähte und die voranstehend beschriebenen elektrischen Leitungsverbindungen und Isolierungen der einzelnen Elemente miteinander führen dazu, daß die Kondensatorplattenanordnung und die Temperatursensoranordnung vollständig von dem Gehäuse 19 isoliert, das heißt potentialfrei sind. Das Gehäuse kann somit an beliebiger Stelle in leitender oder nicht leitender Verbindung etwa in einer Öffnung einer Behälterwand oder dergleichen angebracht werden. Hierzu können geeignete Befestigungsmittel, etwa ein Außengewinde auf dem Mantel des zylindrischen Gehäuses 19, vorgesehen werden.

Die auf den Keramikplatten 6, 7 aufgebrachten Metallisierungen 11, 5 , 4, 60 und der Temperatursensor 17 können durch bekannte Verfahren hergestellt werden, wobei bevorzugt eine Dickfilmbeschichtungstechnik angewandt wird.

Die Figuren 2 bis 5 zeigen sehr deutlich die koaxiale Anordnung der verschiedenen Anschlußdrähte 12 bis 16, deren kontaktfreie Führung und ihre entsprechende leitende Verbindung mit den verschiedenen Metallisierungschichten. Diese koaxiale Anordnung erlaubt eine äußerst schlanke Bauweise mit einer sicheren, verstärkten Herausführung der Anschlußleitungen über die Metallröhrchen 25, die gegebenfalls als Steckerstifte ausgeführt sein können.

**Patentansprüche**

1. Kapazitiver Druckwandler mit einem vornehmlich zylindrischen Gehäuse dessen eine Stirnseite mit einer Membran abgeschlossen ist, von der ein zentral angeordnetes Führungsglied in das Innere des Gehäuses führt und bei Druckanwendung auf die Membran eine bewegliche Kondensatorplattenvorrichtung bezüglich zumindest einer festen Kondensatorplatte verschiebt, und wobei die Kondensatorelektroden über aus dem Gehäuse herausgeführte Anschlußleitungen mit einer Schaltungsanordnung zur Feststellung und Anzeige des auf die Membran ausgeübten Druckes in Verbindung stehen,
   **dadurch gekennzeichnet,**
   daß die Anschlußleitungen (12,13,14) parallel zur Zylinderachse des Gehäuses (19) verlaufend durch ein der Membran (1) gegenüberliegendes Abschlußelement (52) des Gehäuses herausgeführt sind.

2. Druckwandler nach Anspruch 1
   **dadurch gekennzeichnet,**
   daß im Inneren des Gehäuses (19) koaxial zur Längsachse des Gehäuses zwei ringförmige Keramikplatten (6,7) mit sich in einem vorbestimmten Abstand gegenüberliegenden Stirnflächen angeordnet sind, die zwei feststehende Kondensatorelektroden (4, 5) bildende Metallisierungen tragen, wobei diesen festen Kondensatorelektroden (4,5) je eine entsprechende am Führungsglied (2) angebrachte bewegliche Kondensatorplatte (3) gegenüberliegt.

3. Druckwandler nach Anspruch 1 oder 2,
**dadurch gekennzeichnet,**
daß das Führungsglied (2) reibungsfrei für eine Bewegung längs der Längsachse des Gehäuses gehalten ist, wobei das Führungsglied (2) in einer quer zur Bewegungsrichtung des Führungsgliedes (2) angeordneten elastischen Scheibe (8) befestigt ist, die an ihrem Umfang ortsfest eingespannt ist.

4. Druckwandler nach Anspruch 3,
**dadurch gekennzeichnet,**
daß die Scheibe (8) zwischen Schalen (9, 10) eingespannt ist, in denen die Keramikplatten (6, 7) befestigt sind.

5. Druckwandler nach einem der vorhergehenden Ansprüche,
**dadurch gekennzeichnet,**
daß zwischen dem Führungselement (2) und den beweglichen Kondensatorplatten (3) sowie zwischen dem Innenmantel des Gehäuses (19) und den Schalen (9, 10) Isolierelemente (22) angeordnet sind.

6. Druckwandler nach einem der vorhergehenden Ansprüche,
**dadurch gekennzeichnet,**
daß die Anschlußleitungen (12 bis 16) koaxial um die Längsachse des Gehäuses (19) angeordnet sind.

7. Druckwandler nach einem der vorhergehenden Ansprüche,
**dadurch gekennzeichnet,**
daß je eine Anschlußleitung (13 bzw. 14) mit der Metallisierung je einer festen Kondensatorelektrode (4, 5) leitend verbunden und in mindestens einer der Keramikplatten (6, 7) mechanisch fixiert ist.

8. Druckwandler nach einem der vorhergehenden Ansprüche,
**dadurch gekennzeichnet,**
daß die beweglichen Kondensatorplatten (3) über die federnde Scheibe (8) und die Schalen (9, 10) über eine kontaktierende Metallisierung (11) auf den Keramikplatten (6, 7) mit einer der Anschlußleitung (12) elektrisch leitend verbunden sind.

9. Druckwandler nach einem der vorhergehenden Ansprüche,
**dadurch gekennzeichnet,**
daß die Anschlußleitungen (12 bis 16) derart isoliert aus dem Inneren des Gehäuses (19) herausgeführt sind, daß keine elektrisch leitende Verbindung zum Gehäuse (19) besteht und somit Potentialfreiheit gegeben ist, wobei die Anschlußleitungen (12 bis 16) unter Druckglasisolierung durch das Abschlußelement (52) hindurchgeführt sind.

10. Druckwandler nach Anspruch 9,
**dadurch gekennzeichnet,**
daß die Anschlußleitungen (12 bis 16) durch Metallröhrchen (25) hindurchgeführt sind, die über Druckglasringe (23) in dem Abschlußelement (52) eingelassen sind.

11. Druckwandler nach einem der vorhergehenden Ansprüche,
**dadurch gekennzeichnet,**
daß zur elektrisch leitenden Verbindung der Metallisierung der festen Kondensatorelektroden (4, 5) die Metallisierung zur Rückseite der jeweiligen Keramikplatte (6, 7) geführt und dort mit der zugeordneten Anschlußleitung elektrisch verbunden ist.

12. Druckwandler nach einem der vorhergehenden Ansprüche,
**dadurch gekennzeichnet,**
daß auf eine der Keramikplatten (6) vornehmlich stirnseitig ein Temperatursensor (17) aufgebracht ist, der an entsprechende Anschlußleitungen (15, 16) angeschlossen ist.

13. Druckwandler nach einem der vorhergehenden Ansprüche,
**dadurch gekennzeichnet,**
daß die Metallisierungen bzw. der Sensor (17) mittels Dünnschicht- bzw. Dickfilmtechnik auf den keramischen Platten (6, 7) aufgebracht sind.

**Claims**

1. Capacitive pressure transducer having an essentially cylindrical housing, the one frontside of which is closed by a diaphragm, with a centrally mounted guide element extending therefrom and into the inside of the housing, said guide element moving a movable capacitor plate device relative to at least one fixed capacitor plate upon exertion of pressure onto said diaphragm, and whereby the capacitor electrodes are connected, via connecting lines extending from the housing, with a circuit array for determining and displaying the pressure exerted upon the diaphragm

**characterized in**

that the connecting lines (12, 13, 14), extending in parallel to the longitudinal cylinder axis of the housing (19), exit the housing through a termination element (52) thereof which is positioned opposite the diaphragm (1).

2. Capacitive tranducer according to claim 1,

**characterized in**

that in the interior of the housing (19), two annular ceramic plates (6, 7) are mounted coaxially to the longitudinal axis of the housing, the front faces of said plates opposing each other at a predetermined distance and bearing two fixed metallisations which form two fixed capacitors (4, 5), said fixed capacitor electrodes (4, 5) each being opposed by a corresponding movable capacitor plate (3) mounted on the guide element (2).

3. Capacitive transducer according to claim 1 or 2,

**characterized in**

that the guide element (2) is frictionlessly disposed for movement along the longitudinal axis of the housing, said guide element (2) being mounted in an elastic disk (8) arranged transversely to the direction of movement of the guide element (2), said disk being circumferentially clamped in its position.

4. Pressure transducer according to claim 3,

**characterized in**

that the disk (8) is clamped between shells (9, 10) in which the ceramic plates (6, 7) are mounted.

5. Pressure transducer according to one of the preceding claims,

**characterized in**

that insulating elements (22) are provided between the guide element (2) and the movable capacitor plates (3) as well as between the inner surface of the housing (19) and the shells (9, 10).

6. Pressure transducer according to one of the preceding claims,

**characterized in**

that the connecting lines (12 through 16) are arranged coaxially around the longitudinal axis of the housing (19).

7. Pressure transducer according to one of the preceding claims,

**characterized in**

that a connecting line each (13, 14, resp.) is conductively connected with the metallisation each of a fixed capacitor electrode (4, 5) and is mechanically fixed in at least one of the ceramic plates (6, 7).

8. Pressure transducer according to one of the preceding claims,

**characterized in**

that the movable capacitor plates (3) are electrically conductively connected with one of the connecting lines (12) via the resilient disk (8), and the shells (9, 10) are electrically conductively connected with one of the connecting lines (12) via a contacting metallisation (11) on the ceramic plates (6, 7).

9. Pressure transducer according to one of the preceding claims,

**characterized in**

that the connecting lines (12 through 16) extending from within the housing (19) are insulated in such a way that there is no electrically conductive connection with the housing (19) and consequently an absence of potential, said connecting lines (12 through 16) passing through the termination element (52) insulated by pressurized glass.

10. Pressure transducer according to claim 9,

**characterized in**

that the connecting lines (12 through 16) pass through small metal tubes (25) which are sunk in the termination element (52) via pressurized glass rings (23).

11. Pressure transducer according to one of the preceding claims,

**characterized in**

that for establishing an electrically conductive connection between the metallisations of the fixed capacitor electrodes (4, 5) the metallisation is led to the rear of the corresponding ceramic plate (6, 7) and there electrically connected with the relevant connecting line.

12. Pressure transducer according to one of the preceding claims,

**characterized in**

that a temperature sensor (17) is provided on one of the ceramic plates (6), mainly on the front side thereof, and is connected to a corresponding connecting line (15, 16).

13. Pressure transducer according to one of the preceding claims,

**characterized in**

that the metallisations or the sensor (17), resp., are mounted onto the ceramic plates (6, 7) using thin layer or thick film technique.

## Revendications

1. Transducteur de pression capacitif comportant un boitier principalement cylindrique dont l'une des faces frontales est fermée par une membrane à partir de laquelle un organe de guidage disposé de manière centrale, pénètre à l'intérieur du boîtier et qui, à l'occasion de l'application d'une pression sur la membrane, déplace un ensemble à plaque de condensateur mobile par rapport à au moins une plaque de condensateur fixe, les électrodes de condensateur étant reliées par l'intermédiaire de connexions de raccordement sortant du boîtier, à un circuit destiné à déterminer et à afficher la pression agissant sur la membrane, caractérisé en ce que les connexions de raccordement (12, 13, 14) sortent au travers d'un élément de fermeture (52) du boîtier, sur le côté opposé à la membrane (1), en s'étendant parallèlement à l'axe de cylindre du boîtier (19).

2. Transducteur de pression selon la revendication 1, caractérisé en ce qu'à l'intérieur du boîtier (19), coaxialement à l'axe longitudinal du boîtier, sont disposées, de manière à ce que leurs faces frontales tournées l'une vers l'autre présentent un espacement prédéfini, deux plaques en céramique (6, 7) de forme annulaire, qui portent des métallisations formant deux électrodes de condensateur fixes (4, 5), à chacune de ces électrodes de condensateur fixes (4, 5) étant respectivement opposée une plaque de condensateur mobile (3) correspondante, fixée sur l'organe de guidage (2).

3. Transducteur de pression selon la revendication 1 ou 2, caractérisé en ce que l'organe de guidage (2) est maintenu libre de frottement pour un déplacement le long de l'axe longitudinal du boîtier, l'organe de guidage (2) étant fixé dans un disque élastique (8) disposé transversalement à la direction de déplacement de l'organe de guidage (2) et enserré en position fixe sur sa périphérie.

4. Transducteur de pression selon la revendication 3, caractérisé en ce que le disque (8) est enserré entre des coques (9, 10) dans lesquelles sont fixées les plaques en céramique (6, 7).

5. Transducteur de pression selon l'une des revendications précédentes, caractérisé en ce que des éléments isolants (22) sont disposés entre l'élément de guidage (2) et les plaques de condensateur mobiles (3), ainsi qu'entre l'enveloppe intérieure du boîtier (19) et les coques (9, 10).

6. Transducteur de pression selon l'une des revendications précédentes, caractérisé en ce que les connexions de raccordement (12 à 16) sont disposées coaxialement autour de l'axe longitudinal du boîtier (19).

7. Transducteur de pression selon l'une des revendications précédentes, caractérisé en ce qu'à la métallisation de chacune des électrodes de condensateur fixes (4, 5) est reliée par une liaison électrique, respectivement une connexion de raccordement (13 et 14) qui est fixée mécaniquement dans au moins une des plaques en céramique (6, 7).

8. Transducteur de pression selon l'une des revendications précédentes, caractérisé en ce que les plaques de condensateur mobiles (3) sont reliées électriquement à une des connexions de raccordement (12), par l'intermédiaire du disque élastique (8) et les coques (9, 10) par l'intermédiaire d'une métallisation (11) faisant contact sur les plaques en céramique (6, 7).

9. Transducteur de pression selon l'une des revendications précédentes, caractérisé en ce que les connexions de raccordement (12 à 16) sortent hors de l'intérieur du boîtier (19) de façon isolée, de manière à ne pas réaliser de liaison électrique avec le boîtier (19) en garantissant ainsi la liberté de potentiel, les connexions de raccordement (12 à 16) passant au travers de l'élément de fermeture (52) en étant isolés par du verre de compression.

10. Transducteur de pression selon la revendication 9, caractérisé en ce que les connexions de raccordement (12 à 16) passent au travers de petits tubes métalliques (25) qui sont insérés par l'intermédiaire d'anneaux de verre de compression (23) dans l'élément de fermeture (52).

11. Transducteur de pression selon l'une des revendications précédentes, caractérisé en ce que pour réaliser la liaison électrique de la métallisation des électrodes de condensateur fixes (4, 5), la métallisation s'étend jusqu'à la face arrière de la plaque en céramique (6, 7) respective et est à cet endroit, reliée électriquement à la connexion de raccordement associée.

**12.** Transducteur de pression selon l'une des revendications précédentes, caractérisé en ce que sur l'une des plaques en céramique (6), est monté, de préférence frontalement, un capteur de température (17) qui est branché à des connexions de raccordement correspondantes (15, 16).

**13.** Transducteur de pression selon l'une des revendications précédentes, caractérisé en ce que les métallisations et le capteur (17) sont appliqués sur les plaques en céramique (6, 7), par la technique des couches minces ou des couches épaisses.

# FIG. 1

# FIG. 2

# FIG. 3

# FIG. 4

# FIG. 5